# EUROPÄISCHE PATENTSCHRIFT

(11) **EP 1 701 478 B1**
(45) Veröffentlichungstag und Bekanntmachung des Hinweises auf die Patenterteilung: **29.02.2012**
(21) Anmeldenummer: 06110820.5
(22) Anmeldetag: 08.03.2006
(51) Int. Cl.: H04W 8/24, G06F 21/00, H04W 12/04

(54) **Anordnung und Verfahren zur automatischen Konfiguration von Schnittstellen einer drahtlosen Verbindung zur Datenübertragung**
System and method for automatically configuring interfaces of a wireless connection for data transmission
Système et procédé de configuration automatique des interfaces d'une connexion sans fil pour la transmission de données

(30) Priorität: 06.07.2005 DE 102005032692; 09.03.2005 DE 202005004352 U
(43) Veröffentlichungstag der Anmeldung: 13.09.2006
(73) Patentinhaber: AVM Audiovisuelles Marketing und Computersysteme GmbH, 10559 Berlin (DE)
(72) Erfinder: Friedel, Diego, 12309 Berlin (DE)
(74) Vertreter: Hengelhaupt, Jürgen

(56) Entgegenhaltungen:
- EP-A1- 1 499 067
- EP-A1- 1 553 729
- EP-A1- 1 553 746
- US-A1- 2001 043 702
- AVM: "AVM: WLAN-Router mit USB-Anschluss wird zum File-Server - Stick&Surf: Neue Technik für automatische WLAN-Absicherung"[Online] 9. Mai 2005 (2005-05-09), Seiten 1-2, XP002377636 Gefunden im Internet: URL:http://www.golem.de/print.php?a=37925> [gefunden am 2006-04-19]
- LISA PREUSS: "Rainbow Technologies Adds USB Support For PC And Macintosh Software Developers To Sentinel Line" NEWS RELEASE, 17. November 1998 (1998-11-17), XP002139273
- KOUTROUBINAS S ET AL: "Enhancing security in wireless networks" CONSUMER ELECTRONICS, 2004 IEEE INTERNATIONAL SYMPOSIUM ON READING, UK SEPT. 1-3, 2004, PISCATAWAY, NJ, USA,IEEE, 1. September 2004 (2004-09-01), Seiten 214-218, XP010755775 ISBN: 0-7803-8527-6
- AVM: "Installations-Handbuch der Fritz!Box Fon WLAN passage" INSTALLATIONS-HANDBUCH DER FRITZ! FON WLAN, XX, XX, Oktober 2004 (2004-10), Seiten 7-20,37, XP002356490

## Beschreibung

Die Erfindung betrifft eine Anordnung und ein Verfahren zur Konfiguration von Schnittstellen einer drahtlosen Verbindung zur Datenübertragung sowie ein entsprechendes Computerprogramm und ein entsprechendes computerlesbares Speichermedium, welche insbesondere einsetzbar sind zum Aufbau von WLAN-Verbindungen (WLAN = Wireless Local Area Network) oder dgl.

Eine große Rolle innerhalb der sich etablierenden Informationsgesellschaft spielt die Nutzung flexibler Zugangsmöglichkeiten zu Daten- und/oder Kommunikationsnetzen wie dem Internet. Weit verbreitet sind mittlerweile Lösungen für den drahtlosen Zugang zu Daten- und/oder Kommunikationsnetz durch Nutzung z.B. der WLAN-Technologie. Für den drahtlosen Zugang werden drahtlose Zugangspunkte (so genannte [wireless] Access Points) bereitgestellt.

Ein solcher Access Point besitzt üblicherweise eine standardisierte Schnittstelle zum Verbinden mit einem Drahtlos-Adapter (Client).

Aus dem Stand der Technik, beispielsweise aus dem "Installations-Handbuch der FRITZ!Box Fon WLAN", AVM GmbH 2004, ist bekannt, dass der Client an ein Endsystem (z.B. PC, Notebook oder dgl.) angeschlossen wird. Der Nutzer ist sodann gehalten, über dieses Endsystem zumindest einige manuelle Einstellungen zur Nutzung der Drahtlostechnik zwischen Client und Access Point vorzunehmen. Dies betrifft insbesondere - aber nicht ausschließlich - die Eingabe von Sicherheitsparametern. Die Informationen, welche Einstellungen jeweils vorzunehmen sind, muss der Nutzer sich in der Regel aus verschiedenen Quellen beschaffen (Readme, Benutzerhandbuch, etc.). Erfahrungsgemäß treten gerade bei der Vornahme von manuellen Einstellungen relativ viele Fehler auf, insbesondere deshalb, weil der Nutzer Informationen verwertet, die in Bezug auf die gewünschte Nutzung zwischen Access Point und Client nicht relevant oder nicht korrekt sind, andererseits deshalb, weil der Nutzer richtige Informationen nicht korrekt eingegeben hat. Die Folge ist, dass der Nutzer sich einem erheblichen Konfigurationsaufwand ausgesetzt sieht, der oftmals fehlerbehaftet ist, so dass es dem Nutzer im Ergebnis oft nicht gelingt, die gewünschte Drahtlos-Verbindung (in angemessener/akzeptabler Zeit) aufzubauen.

Aus dem Stand der Technik ist die europäische Patentanmeldung EP 1 499 067 A1 bekannt, in welcher eine IC-Karte beschrieben wird, mit der Informationen zum Aufbau einer Kommunikationsverbindung aus einem Access Point ausgelesen und an ein Endgerät übertragen werden können.

In der Veröffentlichung Preuss, Lisa: Rainbow Technologies Adds USB Support For PC And Macintosh Software Developpers To Sentinel Line, News Realease, Rainbow Technologies, Inc., Las Vegas, NV, November 1998 wird ein USB-Key mit einer eindeutigen ID beschrieben. Der USB-Key weist jedoch keine Schnittstelle zu drahtlosen Netzwerken auf.

Die Veröffentlichung Koutroubinas, Stelios et al.: Enhancing Security in Wireless Networks, Consumer Electronics, 2004 IEEE International Symposium on Reading, UK 1. September 2004, Seiten 214 bis 218 offenbart eine Kombination aus Smart Card und WLAN-Stick, durch welchen die Sicherheit der Kommunikation in drahtlosen Netzwerken erhöht werden soll. Für die Konfiguration einer drahtlosen Schnittstelle sind die in dem WLAN-Stick abgelegten Daten nicht geeignet.

Eine vergleichbare Lösung wird in US 2001/0043702 A1 beschrieben. Gemäß dieser Lösung wird ein Speichermittel (Key) eingesetzt, auf dem persönliche, sicherheitsrelevante Daten sicher abgelegt werden können. Eine Verwendung des Key als Drahtlos-Adapter ist in US 2001/0043702 A1 nicht vorgesehen.

Die Aufgabe der Erfindung besteht somit darin, eine Anordnung und ein Verfahren zur Konfiguration von Schnittstellen einer drahtlosen Verbindung zur Datenübertragung sowie ein entsprechendes Computerprogramm und ein entsprechendes computerlesbares Speichermedium bereitzustellen, welche die oben genannten Mängel beheben und es insbesondere erlauben, Konfigurationsaufwand für eine drahtlose Schnittstelle zu einem Daten- und/oder Kommunikationsnetz zu reduzieren.

Diese Aufgabe wird erfindungsgemäß durch die Merkmale in den Ansprüchen 1, 2, 11, 12 und 20 bis 23 gelöst. Zweckmäßige Ausgestaltungen der Erfindung sind in den Unteransprüchen enthalten.

Ein besonderer Vorteil der Erfindung besteht darin, dass bei der Konfiguration einer solchen drahtlosen Schnittstelle auf manuelle Eingaben (weitgehend) verzichtet werden kann, indem ein Verfahren zur Konfiguration von Schnittstellen einer drahtlosen Verbindung zur Datenübertragung eingesetzt wird, wobei in mindestens einer ersten Schnittstelle der drahtlosen Verbindung zumindest ein Teil der für die Konfiguration der Schnittstellen erforderlichen Daten gespeichert ist, über eine erste Kommunikationsverbindung von der mindestens einen ersten Schnittstelle wenigstens ein Teil der Daten für die Konfiguration auf ein Mittel zur Datenspeicherung übertragen, über eine zweite Kommunikationsverbindung wenigstens ein Teil der auf das Mittel zur Datenspeicherung übertragenen Daten für die Konfiguration mindestens einer zweiten Schnittstelle der drahtlosen Verbindung und/oder einer mit der mindestens einen zweiten Schnittstelle verbundenen Datenverarbeitungseinrichtung verfügbar gemacht wird und in Abhängigkeit von den verfügbar gemachten Daten für die Konfiguration eine Verbindung zwischen der mindestens einen ersten und zweiten Schnittstelle der drahtlosen Verbindung aufbaubar ist. Daten für die Konfiguration der drahtlosen Verbindung umfassen dabei beispielsweise u.a. WPA-Schlüssel (WPA = WiFi Protected Access, WiFi = Wireless Fidelity), SSID (=Service-Set-ID).

Die Daten für die Konfiguration können der zweiten Schnittstelle der drahtlosen Verbindung und/oder der mit der mindestens einen zweiten Schnittstelle verbundenen Datenverarbeitungseinrichtung verfügbar oder nutzbar gemacht werden, indem sie auf die zweite Schnittstelle bzw. die Datenverarbeitungseinrichtung übertragen werden. In einer bevorzugten Ausführungsform ist vorgesehen, dass die Mittel zur Datenspeicherung in der zweiten Schnittstelle integriert sind. In diesem Falle muss keine Übertragung der Konfigurationsdaten stattfinden, sondern es genügt, dass bei der Konfiguration der Schnittstelle auf diese Daten (ungehindert) zugegriffen werden kann.

Ein anderes erfindungsgemäßes Verfahren zur Konfiguration von Schnittstellen einer drahtlosen Verbindung zur Datenübertragung ist dadurch ausgezeichnet, dass in mindestens einer ersten Schnittstelle der drahtlosen Verbindung und in einem Mittel zur Datenspeicherung zumindest ein Teil der für die Konfiguration der Schnittstellen erforderlichen Daten gespeichert ist, wobei die in der mindestens einen ersten Schnittstelle und in dem Mittel zur Datenspeicherung gespeicherten Daten für die Konfiguration derart aufeinander abgestimmt sind, dass eine drahtlose Verbindung zwischen der mindestens einen ersten und mindestens einer zweiten Schnittstelle der drahtlosen Verbindung aufbaubar ist, nachdem wenigstens ein Teil der auf dem Mittel zur Datenspeicherung gespeicherten Daten für die Konfiguration über eine Kommunikationsverbindung für die mindestens eine zweite Schnittstelle und/oder für eine mit der mindestens einen zweiten Schnittstelle verbundene Datenverarbeitungseinrichtung nutzbar gemacht wurden.

Der Unterschied zu dem vorher beschriebenen Verfahren besteht darin, dass bei der zweiten Ausführungsform die Konfigurationsdaten, welche bei der vorher beschriebenen ersten Variante mit Hilfe des Speichermittels zuerst von der ersten Schnittstelle (beispielsweise von einem Access Point) heruntergeladen werden, da im allgemeinen keine Vorababstimmung der Daten erfolgt ist, nunmehr in der zweiten Ausführungsform diese Konfigurationsdaten bereits in dem Mittel zur Datenspeicherung vorliegen. Ein Herunterladen ist deshalb nicht mehr nötig, da schon nach Anschluss der mindestens einen zweiten Schnittstelle an die mindestens eine erste Schnittstelle eine Nutzung der Drahtlostechnik zwischen diesen Schnittstellen ermöglicht wird.

In einer bevorzugten Ausführungsform des erfindungsgemäßen Verfahrens ist vorgesehen, dass
- mindestens eine Schnittstelle der drahtlosen Verbindung als Access Point, als eine in ein Endsystem integrierte drahtlose Schnittstelle oder als Drahtlos-Adapter und/oder
- die Datenverarbeitungseinrichtung als Endsystem ausgebildet ist. Der mindestens eine Access Point kann beispielsweise als Zugang zu einem Computernetz, dem Internet, einem LAN o.dgl. dienen.

Als Endsystem kommt jedes Gerät in Frage, welches in ein Daten- und/oder Kommunikationsnetz über eine konfigurierbare (drahtlose) Schnittstelle eingebunden werden kann. Bei dem Endsystem kann es sich beispielsweise um einen PC, ein Notebook, ein PDA oder dgl. handeln. Es kann aber auch ein Access Point als Endsystem eingesetzt werden, beispielsweise wenn ein Netzwerk durch Hinzufügen dieses Access Points erweitert werden soll. Als Endsystem kann weiterhin ein Drucker mit drahtloser Schnittstelle zum Einsatz kommen; die drahtlose Schnittstelle des Druckers würde in diesem Falle als erste Schnittstelle der drahtlosen Verbindung fungieren.

Eine andere bevorzugte Ausführungsform sieht vor, dass von der mindestens einen ersten und von der mindestens einen zweiten Schnittstelle der drahtlosen Verbindung jeweils mindestens eine als Access Point ausgebildet ist. In dieser Ausführungsform kann das erfindungsgemäße Verfahren besonders vorteilhaft genutzt werden, um mehrere Access Points zu einem Cluster zu konfigurieren.

Solche Cluster werden in der Regel eingesetzt, um das Bewegungsfeld eines mobilen Nutzers/Endsystems zu vergrößern, indem sich Nutzer/Endsystem ohne Unterbrechung der Kommunikationsverbindung von einem Access Point zu anderen bewegen können (Roaming). Dazu müssen die Access Points des Clusters entsprechend konfiguriert sein. Hierzu können beispielsweise die Konfigurationsdaten auf einem Access Point gespeichert werden. Vorteilhaft ist es, wenn dieser Access Point als Master-Access Point für die Steuerung des gesamten Clusters eingesetzt wird. Um einen neuen Access Point im Cluster anzumelden, werden erfindungsgemäß Konfigurationsdaten von dem (Master-)Access Point auf ein Speichermittel und anschließend von dem Speichermittel auf den einzubindenden Access Point übertragen. Aufwendige manuelle Konfigurationen entfallen bei diesem Vorgehen.

In einer weiteren bevorzugten Ausführungsform des erfindungsgemäßen Verfahrens ist vorgesehen, dass die Daten für die Konfiguration der Schnittstellen von der mindestens einen ersten Schnittstelle auf die mindestens eine zweite Schnittstelle heruntergeladen und anschließend von der mindestens einen zweiten Schnittstelle der mit dieser verbundenen Datenverarbeitungseinrichtung zur Verfügung gestellt werden.

Um die mindestens eine erste Schnittstelle und Mittel zur Datenspeicherung mit aufeinander abgestimmten Daten zu versehen, erweist es sich als vorteilhaft, wenn Schnittstelle und Speichermittel bereits zum Produktionszeitpunkt oder zu einem anderen Zeitpunkt vor Auslieferung an einen Kunden mit aufeinander abgestimmten Daten für die Konfiguration der Schnittstelle versehen werden.

Damit mehrere Systeme über die erste Schnittstelle kommunizieren können, erweist es sich als vorteilhaft, dass auf der mindestens einen ersten Schnittstelle Konfigurationsdaten für mehrere zweite Schnittstellen abgelegt werden. Von Vorteil ist es auch, wenn die auf der mindestens einen ersten Schnittstelle abgelegten Konfigurationsdaten veränderbar sind - vorzugsweise von einem autorisierten Administrator.

Das erfindungsgemäße Verfahren lässt sich besonders vorteilhaft zum Aufbau einer drahtlosen Verbindung zwischen einem Endsystem und einem Daten- und/oder Kommunikationsnetz unter Verwendung eines drahtlosen Zugangspunktes (Access Point) und einer drahtlosen Schnittstelleneinheit (Drahtlos-Adapter) ein Verfahren einsetzen. Dabei ist vorgesehen, dass in dem Access Point zumindest ein Teil der für die Konfiguration der drahtlosen Verbindung erforderlichen Daten gespeichert ist, über eine erste Kommunikationsverbindung von dem Access Point wenigstens ein Teil der Daten für die Konfiguration auf ein Mittel zur Datenspeicherung, über eine zweite Kommunikationsverbindung wenigstens ein Teil der auf das Mittel zur Datenspeicherung übertragenen Daten für die Konfiguration auf das Endsystem und/oder auf den Drahtlos-Adapter übertragen werden und in Abhängigkeit von auf das Endsystem und/oder auf den Drahtlos-Adapter übertragenen Daten für die Konfiguration eine Verbindung zwischen Endsystem und Daten- und/oder Kommunikationsnetz aufgebaut wird.

Alternativ zu dem voranstehenden Verfahren kann auch ein Verfahren genutzt werden, welches vorsieht, dass in dem Access Point und in einem Mittel zur Datenspeicherung zumindest ein Teil der für die Konfiguration der drahtlosen Verbindung erforderlichen Daten gespeichert ist, wobei die in dem Access Point und in dem Mittel zur Datenspeicherung gespeicherten Daten für die Konfiguration derart aufeinander abgestimmt sind, dass eine drahtlose Verbindung zwischen Endsystem und Daten- und/oder Kommunikationsnetz aufgebaut werden kann, nachdem wenigstens ein Teil der auf dem Mittel zur Datenspeicherung gespeicherten Daten für die Konfiguration über eine Kommunikationsverbindung auf das Endsystem und/oder auf den Drahtlos-Adapter übertragen wurden.

Als vorteilhaft erweist es sich auch, zur Konfiguration von Schnittstellen einer drahtlosen Verbindung zur Datenübertragung eine Anordnung einzusetzen, welche mindestens eine erste und mindestens eine zweite Schnittstelle umfasst und dadurch ausgezeichnet ist, dass sie weiterhin ein Mittel zur Datenspeicherung, Mittel zur Herstellung einer ersten Kommunikationsverbindung zwischen der mindestens einen ersten Schnittstelle und dem Mittel zur Datenspeicherung sowie Mittel zur Herstellung einer zweiten Kommunikationsverbindung zwischen dem Mittel zur Datenspeicherung und einer Datenverarbeitungseinrichtung und/oder der mindestens einen zweiten Schnittstelle umfasst und derart eingerichtet ist, dass in der mindestens einen ersten Schnittstelle zumindest ein Teil der für die Konfiguration der Schnittstellen erforderlichen Daten gespeichert ist, über die Mittel zur Herstellung der ersten Kommunikationsverbindung wenigstens ein Teil der in der mindestens einen ersten Schnittstelle gespeicherten Daten für die Konfiguration auf das Mittel zur Datenspeicherung übertragbar ist, über die Mittel zur Herstellung der zweiten Kommunikationsverbindung wenigstens ein Teil der auf das Mittel zur Datenspeicherung übertragenen Daten für die Konfiguration für die Datenverarbeitungseinrichtung und/oder für die mindestens eine zweite Schnittstelle nutzbar sind, und in Abhängigkeit von den nutzbaren Daten für die Konfiguration eine Verbindung zwischen der mindestens einen ersten und zweiten Schnittstelle der drahtlosen Verbindung aufbaubar ist.

Alternativ zu der voranstehenden Anordnung kann auch eine Anordnung, umfassend mindestens eine erste und mindestens eine zweite Schnittstelle, genutzt werden, welche weiterhin ein Mittel zur Datenspeicherung sowie Mittel zur Herstellung einer Kommunikationsverbindung zwischen dem Mittel zur Datenspeicherung und einer Datenverarbeitungseinrichtung und/oder der mindestens einen zweiten Schnittstelle umfasst und derart eingerichtet ist, dass in der mindestens einen ersten Schnittstelle und in dem Mittel zur Datenspeicherung zumindest ein Teil der für die Konfiguration der Schnittstellen erforderlichen Daten gespeichert ist, und die in der mindestens einen ersten Schnittstelle und in dem Mittel zur Datenspeicherung gespeicherten Daten für die Konfiguration derart aufeinander abgestimmt sind, dass eine drahtlose Verbindung zwischen der mindestens einen ersten und zweiten Schnittstelle der drahtlosen Verbindung herstellbar ist, nachdem wenigstens ein Teil der auf dem Mittel zur Datenspeicherung gespeicherten Daten für die Konfiguration über die Kommunikationsverbindung für die Datenverarbeitungseinrichtung und/oder für die mindestens eine zweite Schnittstelle nutzbar gemacht wurden.

Eine bevorzugte Ausführungsform sieht vor, dass mindestens ein Mittel zur Herstellung einer Kommunikationsverbindung als USB-Schnittstelle ausgebildet ist.

Als besonders vorteilhaft erweist es sich, wenn das Mittel zur Datenspeicherung in die mindestens eine zweite Schnittstelle - vorzugsweise in einen Drahtlos-Adapter - integriert ist. Als vorteilhaft erweist es sich darüber hinaus, wenn die mindestens eine zweite Schnittstelle (der Drahtlos-Adapter) als USB-WLAN-Stick ausgebildet ist.

Eine andere bevorzugte Ausführungsform sieht vor, dass von der mindestens einen ersten Schnittstelle Variationen und/oder Konfigurationen zur individuellen Verschlüsselung abrufbar sind. Es ist dabei vorgesehen, dass die Variation und/oder Konfiguration zur individuellen Verschlüsselung fest vorgegeben oder benutzerspezifisch variierbar sind.

Als vorteilhaft erweist es sich ebenfalls, wenn der die mindestens eine erste und/oder die mindestens eine zweite Schnittstelle Mittel zur Signalisierung von Zuständen aufweisen. Auch die Mittel zur Datenspeicherung können mit Mitteln zur Signalisierung von Zuständen kombiniert sein. Dabei kann es sich um visuelle und/oder akustische Signalisierungen wie verschiedenfarbige Leuchten handeln, die eine erfolgreiche Datenübertragung, beispielsweise von einem Access Point zu dem Mittel zur Datenspeicherung, oder das Auftreten eines Fehlers anzeigen.

Ein spezielle Ausführungsform der Erfindung besteht darin, dass die Anordnung zur Herstellung einer drahtlosen Verbindung zwischen einem Endsystem und einem Daten- und/oder Kommunikationsnetz eingesetzt wird, wobei die Anordnung einen drahtlosen Zugangspunkt (Access Point), eine drahtlose Schnittstelleneinheit (Drahtlos-Adapter), weiterhin ein Mittel zur Datenspeicherung, erste Schnittstellen zwischen Access Point und dem Mittel zur Datenspeicherung sowie zweite Schnittstellen zwischen dem Mittel zur Datenspeicherung und dem Endsystem und/oder dem Drahtlos-Adapter umfasst und derart eingerichtet ist, dass in dem Access Point zumindest ein Teil der für die Konfiguration der drahtlosen Verbindung erforderlichen Daten gespeichert ist, über die erste Schnittstelle wenigstens ein Teil der auf dem Access Point gespeicherten Daten für die Konfiguration auf das Mittel zur Datenspeicherung übertragbar sind, über die zweite Schnittstelle wenigstens ein Teil der auf das Mittel zur Datenspeicherung übertragenen Daten für die Konfiguration auf das Endsystem und/oder auf den Drahtlos-Adapter übertragbar sind, und in Abhängigkeit von auf das Endsystem und/oder auf den Drahtlos-Adapter übertragenen Daten für die Konfiguration eine Verbindung zwischen Endsystem und Daten- und/oder Kommunikationsnetz herstellbar ist.

Eine andere erfindungsgemäße Anordnung zur Herstellung einer drahtlosen Verbindung zwischen einem Endsystem und einem Daten- und/oder Kommunikationsnetz, umfassend einen drahtlosen Zugangspunkt (Access Point) und eine drahtlose Schnittstelleneinheit (Drahtlos-Adapter), ist dadurch ausgezeichnet, dass die Anordnung weiterhin ein Mittel zur Datenspeicherung sowie Schnittstellen zwischen dem Mittel zur Datenspeicherung und dem Endsystem und/oder dem Drahtlos-Adapter umfasst und derart eingerichtet ist, dass in dem Access Point und in dem Mittel zur Datenspeicherung zumindest ein Teil der für die Konfiguration der drahtlosen Verbindung erforderlichen Daten gespeichert ist, und die in dem Access Point und in dem Mittel zur Datenspeicherung gespeicherten Daten für die Konfiguration derart aufeinander abgestimmt sind, dass eine drahtlose Verbindung zwischen Endsystem und Daten- und/oder Kommunikationsnetz herstellbar ist, nachdem wenigstens ein Teil der auf dem Mittel zur Datenspeicherung gespeicherten Daten für die Konfiguration über eine Kommunikationsverbindung auf das Endsystem und/oder auf den Drahtlos-Adapter übertragen wurden.

Ein Computerprogramm zur Konfiguration von Schnittstellen einer drahtlosen Verbindung zur Datenübertragung ermöglicht es einem Computer, nachdem es in den Speicher des Computers geladen worden ist, derartige Schnittstellen zu konfigurieren, wobei in mindestens einer ersten Schnittstelle der drahtlosen Verbindung zumindest ein Teil der für die Konfiguration der Schnittstellen erforderlichen Daten gespeichert ist, über eine erste Kommunikationsverbindung von der mindestens einen ersten Schnittstelle wenigstens ein Teil der Daten für die Konfiguration auf ein Mittel zur Datenspeicherung übertragen, über eine zweite Kommunikationsverbindung wenigstens ein Teil der auf das Mittel zur Datenspeicherung übertragenen Daten für die Konfiguration mindestens einer zweiten Schnittstelle der drahtlosen Verbindung und/oder einer mit der mindestens einen zweiten Schnittstelle verbundenen Datenverarbeitungseinrichtung verfügbar gemacht wird und in Abhängigkeit von den verfügbar gemachten Daten für die Konfiguration eine Verbindung zwischen der mindestens einen ersten und zweiten Schnittstelle der drahtlosen Verbindung aufbaubar ist.

Zur Konfiguration von Schnittstellen einer drahtlosen Verbindung zur Datenübertragung kann alternativ auch ein Computerprogramm eingesetzt werden, welches es einem Computer ermöglicht, nachdem es in den Speicher des Computers geladen worden ist, derartige Schnittstellen zu konfigurieren, wobei in mindestens einer ersten Schnittstelle der drahtlosen Verbindung und in einem Mittel zur Datenspeicherung zumindest ein Teil der für die Konfiguration der Schnittstellen erforderlichen Daten gespeichert ist, wobei die in der mindestens einen ersten Schnittstelle und in dem Mittel zur Datenspeicherung gespeicherten Daten für die Konfiguration derart aufeinander abgestimmt sind, dass eine drahtlose Verbindung zwischen der mindestens einen ersten und mindestens einer zweiten Schnittstelle der drahtlosen Verbindung aufbaubar ist, nachdem wenigstens ein Teil der auf dem Mittel zur Datenspeicherung gespeicherten Daten für die Konfiguration über eine Kommunikationsverbindung für die mindestens eine zweite Schnittstelle und/oder für eine mit der mindestens einen zweiten Schnittstelle verbundene Datenverarbeitungseinrichtung nutzbar gemacht wurden.

Beispielsweise können diese Computerprogramme (gegen Gebühr oder unentgeltlich, frei zugänglich oder passwortgeschützt) downloadbar in einem Daten- oder Kommunikationsnetz bereitgestellt werden. Die so bereitgestellten Computerprogramme können dann durch ein Verfahren nutzbar gemacht werden, bei dem ein Computerprogramm nach Anspruch 20 oder 21 aus einem elektronischen Datennetz wie beispielsweise aus dem Internet auf eine an das Datennetz angeschlossene Datenverarbeitungseinrichtung heruntergeladen wird.

Um Schnittstellen einer drahtlosen Verbindung zur Datenübertragung zu konfigurieren, wird vorteilhafterweise ein computerlesbares Speichermedium eingesetzt, auf dem ein Programm gespeichert ist, das es einem Computer ermöglicht, nachdem es in den Speicher des Computers geladen worden ist, ein Verfahren zur Konfiguration dieser Schnittstellen durchzuführen, wobei in mindestens einer ersten Schnittstelle der drahtlosen Verbindung zumindest ein Teil der für die Konfiguration der Schnittstellen erforderlichen Daten gespeichert ist, über eine erste Kommunikationsverbindung von der mindestens einen ersten Schnittstelle wenigstens ein Teil der Daten für die Konfiguration auf ein Mittel zur Datenspeicherung übertragen, über eine zweite Kommunikationsverbindung wenigstens ein Teil der auf das Mittel zur Datenspeicherung übertragenen Daten für die Konfiguration mindestens einer zweiten Schnittstelle der drahtlosen Verbindung und/oder einer mit der mindestens einen zweiten Schnittstelle verbundenen Datenverarbeitungseinrichtung verfügbar gemacht wird und in Abhängigkeit von den verfügbar gemachten Daten für die Konfiguration eine Verbindung zwischen der mindestens einen ersten und zweiten Schnittstelle der drahtlosen Verbindung aufbaubar ist.

Alternativ hierzu kann auch ein computerlesbares Speichermedium eingesetzt werden, auf dem ein Programm gespeichert ist, das es einem Computer ermöglicht, nachdem es in den Speicher des Computers geladen worden ist, eine Konfiguration von Schnittstellen einer drahtlosen Verbindung zur Datenübertragung durchzuführen, wobei in mindestens einer ersten Schnittstelle der drahtlosen Verbindung und in einem Mittel zur Datenspeicherung zumindest ein Teil der für die Konfiguration der Schnittstellen erforderlichen Daten gespeichert ist, wobei die in der mindestens einen ersten Schnittstelle und in dem Mittel zur Datenspeicherung gespeicherten Daten für die Konfiguration derart aufeinander abgestimmt sind, dass eine drahtlose Verbindung zwischen der mindestens einen ersten und mindestens einer zweiten Schnittstelle der drahtlosen Verbindung aufbaubar ist, nachdem wenigstens ein Teil der auf dem Mittel zur Datenspeicherung gespeicherten Daten für die Konfiguration über eine Kommunikationsverbindung für die mindestens eine zweite Schnittstelle und/oder für eine mit der mindestens einen zweiten Schnittstelle verbundene Datenverarbeitungseinrichtung nutzbar gemacht wurden.

Es ist für den Fachmann selbstverständlich, auch für davon abweichende Varianten des erfindungsgemäßen Verfahrens, wie beispielsweise die oben erwähnten Verfahren zum Aufbau einer drahtlosen Verbindung zwischen einem Endsystem und einem Daten- und/oder Kommunikationsnetz, ein entsprechendes Computerprogramm und/oder ein entsprechendes computerlesbares Speichermedium einzusetzen.

Die vorliegende Erfindung ermöglicht dem Nutzer, auf manuelle Eingaben (weitgehend) verzichten zu können. Dementsprechend reduzieren sich mögliche Fehlerquellen infolge manueller Eingaben drastisch.

Die Erfindung wird nachfolgend unter Bezugnahme auf die Figuren der Zeichnungen an einem Ausführungsbeispiel näher erläutert. Es zeigt:
- Fig. 1: eine schematische Darstellung der erfindungsgemäßen Anordnung,
- Fig. 2: eine herkömmliche Ausführung einer drahtlosen Schnittstelle mit Access Point, Client (z.B. ein USB-WLAN-Stick) und Notebook,
- Fig. 3a: schematischer Aufbau eines erfindungsgemäßen Access Point,
- Fig. 3b: schematischer Aufbau eines beispielhaften Client nach der Erfindung.

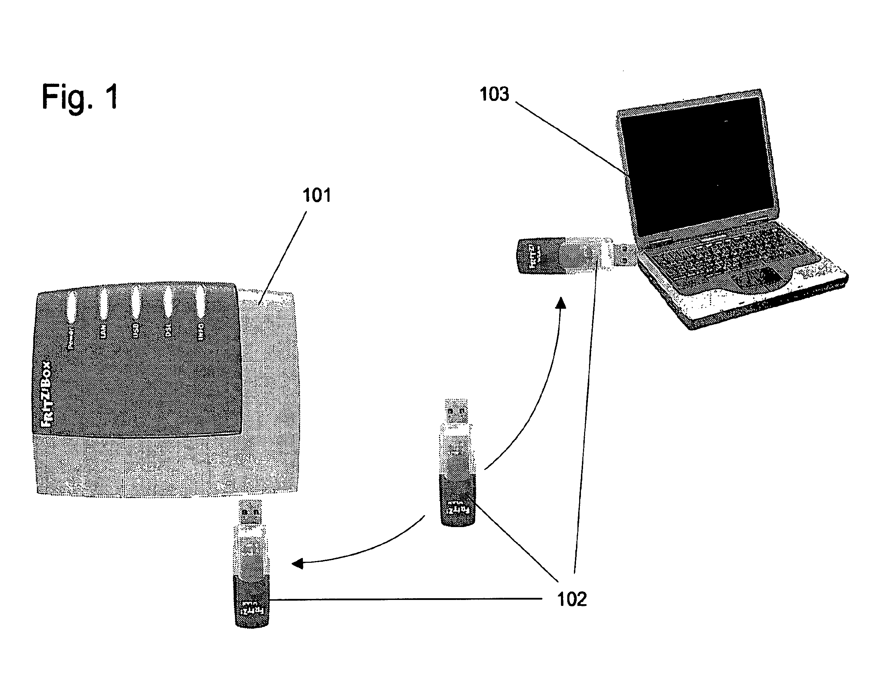

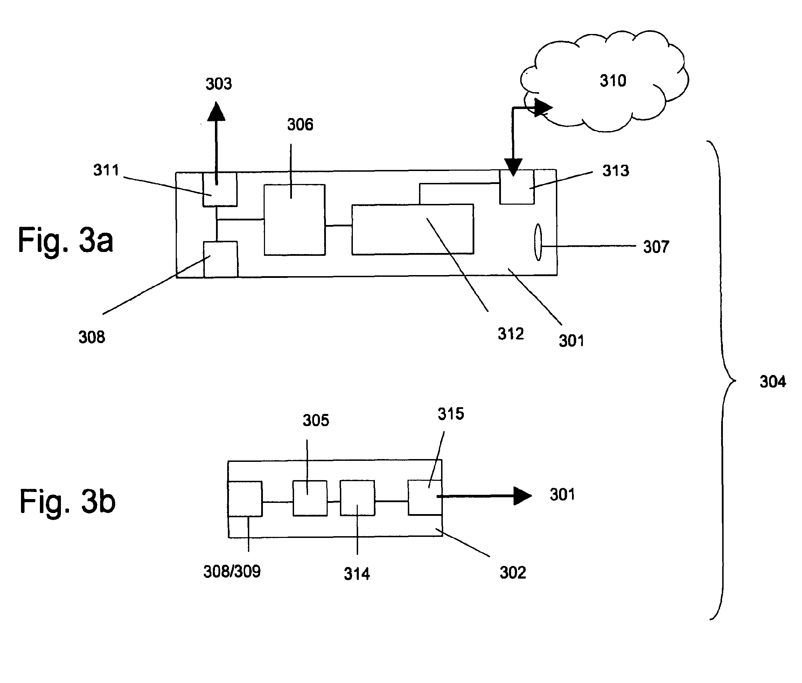

Im Folgenden soll die Erfindung beispielhaft an dem Spezialfall eines als USB-WLAN-Stick 102, 302 ausgebildeten Drahtlos-Adapters mehr detailliert erläutert werden (vgl. Figuren 1 und 3a, b). Der Drahtlos-Adapter bzw. USB-WLAN-Stick 102, 302 ist eine spezielle Ausführungsform der zweiten Schnittstelle der drahtlosen Verbindung, in welche erfindungsgemäß Mittel 305 zur Datenspeicherung integriert sind. Als erste Schnittstelle der drahtlosen Verbindung wird in dem nachfolgend beschriebenen Ausführungsbeispiel ein Access Point 101, 301 eingesetzt. Über einen solchen Access Point 101, 301 kann beispielsweise der Zugang zu einem Computernetz, dem Internet, einem LAN o.dgl. hergestellt werden. Indem sich das Endsystem 103 bei dem Access Point 101, 301 (über eine drahtlose Schnittstelle) einwählt oder auf andere Weise eine Verbindung zum Access Point 101, 301 herstellt, erhält das Endsystem 103 einen drahtlosen Zugang zu dem Daten- und/oder Kommunikationsnetz 310 oder dem Computernetz, dem Internet, einem LAN o.dgl. Dabei ist zu berücksichtigen, dass die Erfindung nicht auf das im folgenden beschriebene Ausführungsbeispiel eingeschränkt ist, sondern andere Schnittstellen bzw. Schnittstellenprotokolle und/oder andere drahtlose Übertragungstechniken eingesetzt werden können.

Insbesondere kann als Schnittstelle 308 zwischen Access Point 101, 301 bzw. dem als Drahtlos-Adapter verwendeten USB-WLAN-Stick 102, 302 und dem Mittel 305 zur Datenspeicherung auch eine drahtlose Technik eingesetzt werden.

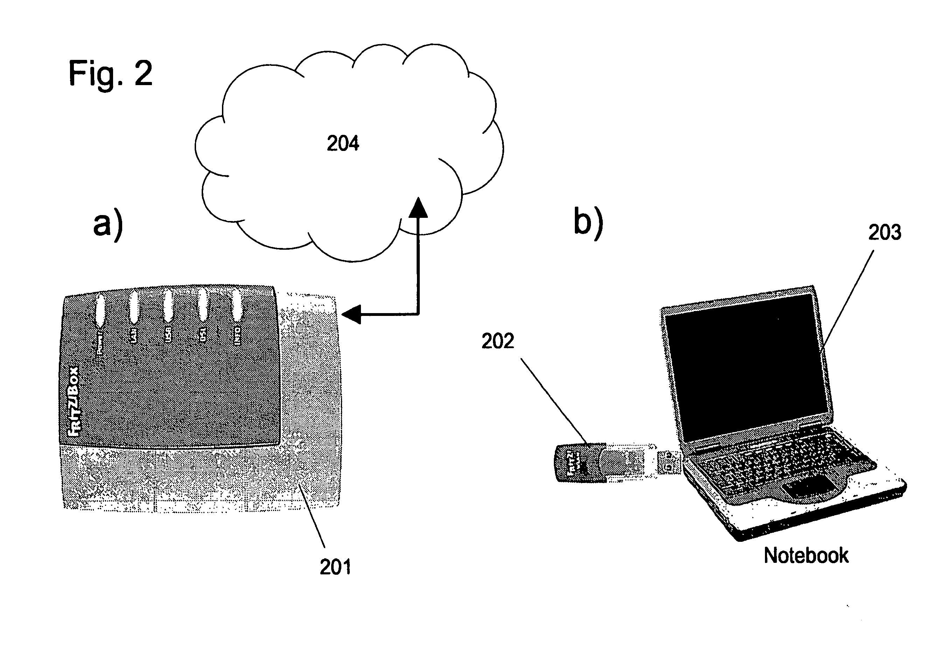

Im Gegensatz zu den in Figur 2 dargestellten herkömmlichen Lösungen für den drahtlosen Zugang zum Internet 204, bei welchen die Konfigurationsdaten der drahtlosen Schnittstelle durch eine fehleranfällige, manuelle Konfiguration zwischen dem mit dem Endsystem 203 verbundenen Drahtlos-Adapter 202 und dem Access Point 201 abgestimmt werden müssen, läuft die Konfiguration der erfindungsgemäßen drahtlosen Schnittstelle automatisch ab.

Dem im folgenden näher beschriebenen Ausführungsbeispiel liegt ein Access Point 101, 301 zugrunde, welcher neben herkömmlichen Komponenten wie (drahtlose) Schnittstelle 311 zum Endsystem 303, Prozessor (Ausführungseinheit) 312 und (drahtgebundene) Schnittstelle 313 zu einem Daten- und/oder Kommunikationsnetz 310 zusätzlich über eine erste Schnittstelle 308 für die Kommunikation mit dem Mittel 305 zur Datenspeicherung und einen speziellen Speicher(bereich) 306, auf dem die Daten zur Konfiguration der drahtlosen Verbindung gespeichert sind, verfügt. Die auf dem Access Point 101, 301 abgelegten Konfigurationsdaten sind dabei in der Regel unabhängig von Endsystemen 303 bzw. nur Access Point-abhängig, da sich ja beliebige Endsysteme 303 in den Access Point 101, 301 einwählen können sollen.

Der nachfolgend beschriebene USB-WLAN-Stick 102, 302 weist neben den auch bisher genutzten Komponenten wie Prozessor (Ausführungseinheit) 314 und (drahtlose) Schnittstelle 315 zum Access Point 101, 301 erfindungsgemäß spezielle Mittel 305 zur Datenspeicherung und eine weitere Schnittstelle auf, über welche Konfigurationsdaten zwischen Access Point 101, 301 und den Mitteln 305 zur Datenspeicherung oder zwischen den Mitteln 305 zur Datenspeicherung und dem Endsystem 303 ausgetauscht werden. Im ersten Falle arbeitet diese weitere Schnittstelle somit als die oben beschriebene erste Schnittstelle 308, im zweiten Falle als zweite Schnittstelle 309.

Ein besonderer Vorteil der Erfindung ist, dass die drahtlose Schnittstelle 304 derart eingerichtet ist, dass ein Zugriff vom Access Point 101, 301 auf die speziellen Mittel 305 zur Datenspeicherung, die in einer speziellen Ausführungsform auf dem USB-WLAN-Stick 102, 302 (Client) installiert sind, ermöglicht wird. Dabei ist der USB-WLAN-Stick 102, 302 in einer ersten Ausführungsform so ausgestaltet, dass er zwecks Einrichtung der drahtlosen Verbindung vorzugsweise zunächst an den Access Point 101, 301 angeschlossen wird (vgl. Figur 1), um die Daten für die Konfiguration der drahtlosen Schnittstelle vom Access Point 101, 301 herunterzuladen. Erst in einem weiteren Schritt wird der Client - wie gewohnt - am Endsystem 103 (z.B. PC, Notebook, etc.) installiert, wobei die vom Access Point 101, 301 heruntergeladenen Daten dem Endsystem 103 zur Verfügung gestellt werden. Ein wichtiger Aspekt der Erfindung besteht darin, dass dem Nutzer bereits bei Anschluss des USB-WLAN-Stick 102, 302 an den Access Point 101, 301 - weitgehend automatisiert ablaufend - in kürzester Zeit eine funktionsfähige und mit einem Höchstmaß an Sicherheit (im Rahmen der auf dem Access Point 101, 301 vorinstallierten Sicherheitseinstellungen) versehene Nutzung der Drahtlostechnik zwischen Access Point 101, 301 und USB-WLAN-Stick 102, 302 für alle denkbaren Nutzungsmöglichkeiten insbesondere Internet, E-Mail, etc. ermöglicht wird.

In einer weiteren, bevorzugten Ausführungsform, sind die speziellen Mittel 305 zur Datenspeicherung innerhalb des USB-WLAN-Sticks 102, 302 so ausgestaltet, dass sie bereits zum Produktionszeitpunkt mit bestimmten Konfigurationsdaten versehen werden kann. In dieser Ausführungsform kann zusätzlich das Erfordernis entfallen, dass der USB-WLAN-Stick 102, 302 zunächst an den Access Point 101, 301 (und dann erst an das Endsystem 103) angeschlossen werden muss, da die aufeinander abgestimmten Daten ja bereits sowohl auf Access Point 101, 301 als auch auf den Mittel 305 zur Datenspeicherung vorhanden sind. Der Installations- bzw. Konfigurationsablauf erfolgt nach Anschluss des USB-WLAN-Sticks 102, 302 an das Endsystem 103 unmittelbar zwischen Access Point 101, 301 und USB-WLAN-Stick 102, 302/Endsystem 103, vorzugsweise über beliebige Drahtlostechniken.

Wichtig an dieser Ausführungsform der Erfindung ist, dass dem Kunden Access Point 101, 301 und Mittel 305 zur Datenspeicherung zur Verfügung gestellt werden, die bereits über aufeinander abgestimmte Konfigurationsdaten verfügen. Deshalb können Access Point 101, 301 und Mittel 305 zur Datenspeicherung auch noch nach dem Produktionszeitpunkt, aber vor Auslieferung an den Kunden mit den abgestimmten Konfigurationsdaten versehen werden, beispielsweise als kundenindividuelle Anpassung (Customizing) durch einen Dienstleistungsanbieter.

Zugleich ist gewährleistet, dass der Nutzer beispielsweise die höchstmögliche Sicherheitsstufe der Verschlüsselung installiert hat.

Die verwendete Zugangstechnik, insbesondere die DrahtlosTechnik wird durch spezielle, technikspezifische Verfahren verschlüsselt (standardisierte Verfahren). Über den Access Point 101, 301 werden vorzugsweise bereits bestimmte Variationen/Konfigurationen zur individuellen Verschlüsselung zur Verfügung gestellt.

Der Sicherheitsgrad der Verschlüsselung soll vorzugsweise während der Produktion möglichst fest vorgegeben (und im Speicher 306 des Access Points 101, 301 hinterlegt) werden. In einer weiteren Ausführung sollen über benutzerspezifische Sicherheits-Eingaben am Access Point 101, 301 gespeicherte Daten, wie beispielsweise Konfigurationen zur individuellen Verschlüsselung, variiert werden können. Hierdurch wird einerseits sichergestellt, dass der Access Point 101, 301 mit verschiedensten Clients 102, 302 verbunden werden kann. Andererseits wird dadurch ermöglicht, dass ein Client 102, 302, der komplexere Verschlüsselungsverfahren beherrscht, effektiv das entsprechend komplexere und damit sicherere Verschlüsselungsverfahren unter Einsatz des Client-Speichers 305 abrufen und nutzbar machen.

Insbesondere basiert der Sicherheitsgrad auf dem gewählten Verschlüsselungsverfahren und der gewählten Schlüssellänge (Sicherheits-Attribute bzw. -Schlüssel bzw. -Daten).

Die Daten müssen beiden Kommunikationspartnern (am Access Point 101, 301 bzw. am USB-WLAN-Stick 102, 302/Endsystem 103) vor dem Beginn der Kommunikationsbeziehung bekannt gemacht werden. Dabei muss verhindert werden, dass ein unbefugter Dritter sich diese Daten verschaffen kann bzw. dass diese Daten dem Dritten zugänglich werden, da andernfalls Einfluss auf die Kommunikationsbeziehung zwischen Access Point 101, 301 und USB-WLAN-Stick 102, 302 genommen werden könnte.

Der Access Point 101, 301 wird zum Produktionszeitpunkt - oder wie oben erwähnt zu einem anderen Zeitpunkt vor der Auslieferung an den Endkunden - mit geräteindividuellen (d.h. in der Regel nur einmal werksseitig vergebenen) Sicherheitsdaten ausgestattet. Diese sind vorzugsweise in einem speziellen Speicher 306 abgelegt. Der Speicher 306 ist vorzugsweise innerhalb des Access Points 101, 301 angeordnet.

Beim Verbinden der Mittel 305 zur Datenspeicherung mit dem Access Point 101, 301 wird vorzugsweise in einem ersten Schritt geprüft, ob die betreffenden Mittel 305 zur Datenspeicherung autorisiert sind, oder im Sinne der vorliegenden Erfindung zum Aufbau einer drahtlosen Verbindung genutzt werden können. Dementsprechend wird vorzugsweise geprüft, ob die (vorzugsweise verschlüsselte) Übertragung insbesondere schützenswerter Information erlaubt ist. Ist dies der Fall, werden aus dem Speicher 306 des Access Point 101, 301 insbesondere bestimmte Konfigurationsdaten abgerufen und auf die Mittel 305 zur Datenspeicherung übertragen. In einer bevorzugten Ausführungsform sind die Mittel 305 zur Datenspeicherung innerhalb des USB-WLAN-Stick 102, 302 angeordnet. Auf diese innerhalb des USB-WLAN-Stick 102, 302 angeordneten Mittel 305 zur Datenspeicherung soll dann vorzugsweise gesondert zugegriffen werden können.

Der Access Point 101, 301 und/oder USB-WLAN-Stick 102, 302 sind vorzugsweise mit gesonderten Mitteln 307 zur Signalisierung ausgestattet, mittels derer vorzugsweise eine visuelle Signalisierung (beispielsweise mittels einer LED), ferner vorzugsweise eine Audio-Signalisierung erfolgen kann. Diese Signalisierung soll vorzugsweise eine erfolgreiche Datenübertragung anzeigen.

In einem weiteren Schritt werden die Mittel 305 zur Datenspeicherung mit einem Endsystem 103, vorzugsweise mit einem PC oder Notebook verbunden. Die dort vorliegende Infrastruktur erkennt die Mittel 305 zur Datenspeicherung und ist bevorzugt in der Lage, die Daten zu lesen und eine gesicherte Verbindung über USB-WLAN-Stick 102, 302 bzw. Access Point 101, 301 aufzubauen. Wie bereits mehrfach erwähnt, kann es vorteilhaft sein, wenn die Mittel 305 zur Datenspeicherung innerhalb des USB-WLAN-Stick 102, 302 angeordnet sind. Dadurch würde eine kompakte Lösung geschaffen. USB-WLAN-Stick 102, 302 und die Mittel 305 zur Datenspeicherung bildeten in einer solchen Ausführung dann eine Einheit, was die Handhabung vereinfacht und nur eine Schnittstelle für beide Einheiten am Endsystem 103 erforderlich machen würde.

In einer weiteren Ausführung ist vorgesehen, dass sich die Mittel 305 zur Datenspeicherung, in dem die Daten abgelegt werden, nicht innerhalb, sondern außerhalb des USB-WLAN-Sticks 102, 302 auf einer gesonderten Vorrichtung befinden. Auf diese Weise wird ermöglicht, jedem, der physikalisch Zugriff zum Client hat, auch Zugriff zu einem eventuell dahinter liegenden System bzw. Netzwerk zu verschaffen.

Um einen möglichst großen Bereich durch Access Points abzudecken, werden oft mehrere Access Points zusammengefasst, zwischen denen ein sogenanntes Roaming möglich ist, d. h. ein Nutzer kann sich mit seinem Notebook frei von dem Ausleuchtungsbereich eines Access Point zu dem Ausleuchtungsbereich eines anderen Access Points bewegen, ohne sich dort neu anmelden zu müssen. Um dieses Roaming zu realisieren, müssen in den einzelnen Access Points entsprechend konfiguriert sein. Die einzelnen Access Points, welche diesen Roaming-Bereich bilden (Cluster), müssen sich untereinander kennen. Deswegen muß sich jeder neu hinzukommende Access Point anmelden. Oft wird ein Master-Access Point zur zentralen Steuerung des Clusters eingesetzt. In diesem Falle reicht es in der Regel aus, wenn sich neu hinzukommende Access Points bei dem Master-Access Point anmelden.

In einer weiteren Ausführungsform der Erfindung ist auf einem ersten Access Point, beispielsweise einem Master-Access Point, wenigstens ein Teil der für ein Roaming erforderlichen Konfigurationsdaten abgelegt. In diesem Fall wird erfindungsgemäß ein Mittel zur Datenspeicherung genutzt, um über eine Schnittstelle dieses Access Points Daten für die Einbindung eines weiteren Access Points in den Cluster auf das Mittel zur Datenspeicherung herunterzuladen. Diese Daten werden anschließend auf den weiteren, einzubindenden Access Point übertragen, indem das Mittel zur Datenspeicherung mit diesem in Verbindung gebracht wird und die Daten dem neuen Access Point übergibt. Beim Vorhandensein eines Master-Access Points genügt es in der Regel, wenn die Daten nur zwischen Master-Access Point und dem neu einzubindenden Access Point ausgetauscht werden. In anderen Fällen kann es erforderlich sein, dass auch zwischen anderen Access Points des Clusters und dem neu einzubindenden Access Point Konfigurationsdaten ausgetauscht werden müssen. Als Mittel zur Datenspeicherung kann für den Austausch der Konfigurationsdaten beispielsweise ein herkömmlicher USB-Speichermodul (USB-Memory Stick) verwendet werden.

Die Erfindung beschränkt sich in ihrer Ausführungsform nicht auf die vorstehend angegebenen bevorzugten Ausführungsbeispiele. Vielmehr ist eine Anzahl von Varianten denkbar, die von der erfindungsgemäßen Anordnung und dem erfindungsgemäßen Verfahren auch bei grundsätzlich anders gearteten Ausführungen Gebrauch machen.

### Bezugszeichenliste

- 101: Access Point
- 102: Drahtlos-Adapter, Client, USB-WLAN-Stick
- 103: Endsystem
- 201: Access Point
- 202: Drahtlos-Adapter
- 203: Endsystem
- 204: Internet
- 301: Access Point
- 302: Drahtlos-Adapter, Client, USB-WLAN-Stick
- 303: Endsystem
- 304: drahtlose Schnittstelle zu einem Daten- und/oder Kommunikationsnetz
- 305: Client-Speicher, Mittel zur Datenspeicherung
- 306: Speicher
- 307: Mittel zur Signalisierung
- 308: erste Schnittstellen
- 309: zweite Schnittstellen
- 310: Daten- und/oder Kommunikationsnetz
- 311: Schnittstelle zum Endsystem
- 312: Prozessor (Ausführungseinheit)
- 313: Schnittstelle zu einem Daten- und/oder Kommunikationsnetz
- 314: Prozessor (Ausführungseinheit)
- 315: Schnittstelle zum Access Point

## Patentansprüche

1. Verfahren zur Konfiguration von Schnittstellen einer drahtlosen Verbindung zur Datenübertragung zwischen mindestens einer ersten und mindestens einer zweiten Datenverarbeitungseinrichtung, wobei in mindestens einer ersten Schnittstelle der drahtlosen Verbindung zumindest ein Teil der für die Konfiguration der Schnittstellen erforderlichen Daten gespeichert ist, über eine erste Kommunikationsverbindung von der mindestens einen ersten Schnittstelle wenigstens ein Teil der Daten für die Konfiguration auf ein Mittel (305) zur Datenspeicherung übertragen,
über eine zweite Kommunikationsverbindung wenigstens ein Teil der auf das Mittel (305) zur Datenspeicherung übertragenen Daten für die Konfiguration mindestens einer zweiten Schnittstelle der drahtlosen Verbindung und/oder der mit der mindestens einen zweiten Schnittstelle verbindbaren zweiten Datenverarbeitungseinrichtung verfügbar gemacht wird und
in Abhängigkeit von den verfügbar gemachten Daten für die Konfiguration eine Verbindung zwischen der mindestens einen ersten und der mindestens einen zweiten Datenverarbeitungseinrichtung aufbaubar ist, **dadurch gekennzeichnet, dass**
die zweiten Schnittstelle als Drahtlos-Adapter (102, 302) ausgebildet und das Mittel (305) zur Datenspeicherung in den Drahtlos-Adapter (102, 302) integriert ist und
die Kommunikation zwischen der mindestens einen ersten und der mindestens einen zweiten Datenverarbeitungseinrichtung über die mindestens eine erste Schnittstelle und den mit der mindestens einen zweiten Datenverarbeitungseinrichtung verbundenen Drahtlos-Adapter (102, 302) erfolgt.

2. Verfahren zur Konfiguration von Schnittstellen einer drahtlosen Verbindung zur Datenübertragung, wobei in mindestens einer ersten Schnittstelle der drahtlosen Verbindung und in einem Mittel (305) zur Datenspeicherung zumindest ein Teil der für die Konfiguration der Schnittstellen erforderlichen Daten gespeichert ist, wobei die in der mindestens einen ersten Schnittstelle und in dem Mittel (305) zur Datenspeicherung gespeicherten Daten für die Konfiguration derart aufeinander abgestimmt sind, dass eine drahtlose Verbindung zwischen der mindestens einen ersten und mindestens einer zweiten Schnittstelle der drahtlosen Verbindung aufbaubar ist, nachdem wenigstens ein Teil der auf dem Mittel (305) zur Datenspeicherung gespeicherten Daten für die Konfiguration über eine Kommunikationsverbindung für die mindestens eine zweite Schnittstelle und/oder für eine mit der mindestens einen zweiten Schnittstelle verbundene Datenverarbeitungseinrichtung nutzbar gemacht wurden,
**dadurch gekennzeichnet, dass**
als zweite Schnittstelle ein Drahtlos-Adapter (102, 302) eingesetzt wird, und das Mittel (305) zur Datenspeicherung in den Drahtlos-Adapter (102, 302) integriert ist.

3. Verfahren nach Anspruch 2,
**dadurch gekennzeichnet, dass**
die mindestens eine erste Schnittstelle und Mittel (305) zur Datenspeicherung bereits zum Produktionszeitpunkt oder zu einem anderen Zeitpunkt vor Auslieferung an einen Kunden mit aufeinander abgestimmten Daten für die Konfiguration der Schnittstelle versehen werden.

4. Verfahren nach Anspruch 1 oder 2,
**dadurch gekennzeichnet, dass**
- die mindestens eine erste Schnittstelle der drahtlosen Verbindung als Access Point (101, 301) und/oder
- die Datenverarbeitungseinrichtung als Endsystem (103)
ausgebildet ist.

5. Verfahren nach Anspruch 5,
**dadurch gekennzeichnet, dass**
das Verfahren genutzt wird, um mehrere Access Points (101, 301) zu einem Cluster zu konfigurieren.

6. Verfahren nach Anspruch 2,
**dadurch gekennzeichnet, dass**
die Konfiguration der Schnittstellen nach Anschluss einer der mindestens einen zweiten Schnittstelle an die Datenverarbeitungseinrichtung unmittelbar zwischen der mindestens einen ersten Schnittstelle und den miteinander verbundenen zweiten Schnittstelle und Datenverarbeitungseinrichtung erfolgt.

7. Verfahren nach Anspruch 1,
**dadurch gekennzeichnet, dass**
nach Verbinden der Mittel (305) zur Datenspeicherung mit der mindestens einen ersten Schnittstelle und vor Übertragung von Konfigurationsdaten auf die Mittel (305) zur Datenspeicherung geprüft wird,
- ob die Mittel (305) zur Datenspeicherung autorisiert sind,
- ob die Mittel (305) zur Datenspeicherung zum Aufbau einer drahtlosen Verbindung nutzbar sind, und/oder
- ob die Übertragung von Information erlaubt ist.

8. Verfahren nach Anspruch 1 oder 2,
**dadurch gekennzeichnet, dass**
eine erfolgreiche Übertragung von Konfigurationsdaten signalisiert wird.

9. Anordnung zur Konfiguration von Schnittstellen einer drahtlosen Verbindung zur Datenübertragung, umfassend mindestens eine erste, mindestens eine zweite Schnittstelle sowie ein Mittel (305) zur Datenspeicherung, wobei die Anordnung derart eingerichtet ist, dass
in der mindestens einen ersten Schnittstelle zumindest ein Teil der für die Konfiguration der Schnittstellen erforderlichen Konfigurationsdaten gespeichert ist,
über eine erste Kommunikationsverbindung wenigstens ein Teil der in der mindestens einen ersten Schnittstelle gespeicherten Konfigurationsdaten auf das Mittel (305) zur Datenspeicherung übertragbar ist,
über eine zweite Kommunikationsverbindung wenigstens ein Teil der auf das Mittel (305) zur Datenspeicherung übertragenen Konfigurationsdaten für eine Datenverarbeitungseinrichtung und/oder für die mindestens eine zweite Schnittstelle nutzbar sind, und
in Abhängigkeit von den nutzbaren Konfigurationsdaten eine Verbindung zwischen der mindestens einen ersten und zweiten Schnittstelle der drahtlosen Verbindung aufbaubar ist,
**dadurch gekennzeichnet, dass**
die zweite Schnittstelle als Drahtlos-Adapter (102, 302) ausgebildet und das Mittel (305) zur Datenspeicherung in den Drahtlos-Adapter (102, 302) integriert ist.

10. Anordnung zur Konfiguration von Schnittstellen einer drahtlosen Verbindung zur Datenübertragung, umfassend mindestens eine erste, mindestens eine zweite Schnittstelle sowie ein Mittel (305) zur Datenspeicherung, wobei die Anordnung derart eingerichtet ist, dass
in der mindestens einen ersten Schnittstelle und in dem Mittel (305) zur Datenspeicherung zumindest ein Teil der für die Konfiguration der Schnittstellen erforderlichen Konfigurationsdaten gespeichert ist, und
die in der mindestens einen ersten Schnittstelle und in dem Mittel (305) zur Datenspeicherung gespeicherten Konfigurationsdaten derart aufeinander abgestimmt sind, dass eine drahtlose Verbindung zwischen der mindestens einen ersten und zweiten Schnittstelle der drahtlosen Verbindung herstellbar ist, nachdem wenigstens ein Teil der auf dem Mittel (305) zur Datenspeicherung gespeicherten Konfigurationsdaten über eine Kommunikationsverbindung für eine mit der mindestens einen zweiten Schnittstelle verbindbaren Datenverarbeitungseinrichtung und/oder für die mindestens eine zweite Schnittstelle nutzbar gemacht wurden,
**dadurch gekennzeichnet, dass**
die zweite Schnittstelle als Drahtlos-Adapter (102, 302) ausgebildet und das Mittel (305) zur Datenspeicherung in den Drahtlos-Adapter (102, 302) integriert ist.

11. Anordnung nach Anspruch 9 oder 10,
**dadurch gekennzeichnet, dass**
der Drahtlos-Adapter (102, 302) als USB-WLAN-Stick ausgebildet ist.

12. Anordnung nach Anspruch 9 oder 10,
**dadurch gekennzeichnet, dass**
- mindestens eine der mindestens einen ersten Schnittstelle der drahtlosen Verbindung als Access Point (101, 301) zu einem Daten- und/oder Kommunikationsnetz und/oder
- die Datenverarbeitungseinrichtung als Endsystem (103) oder als Access Point (101, 301) ausgebildet ist.

13. Anordnung nach Anspruch 9 oder 10,
**dadurch gekennzeichnet, dass**
die Mittel (305) zur Datenspeicherung als USB-Speichermodul ausgebildet sind.

14. Anordnung nach Anspruch 9 oder 10,
**dadurch gekennzeichnet, dass**
von der mindestens einen ersten Schnittstelle Variationen und/oder Konfigurationen zur individuellen Verschlüsselung abrufbar sind.

15. Anordnung nach Anspruch 9 oder 10,
**dadurch gekennzeichnet, dass**
die mindestens eine erste und/oder die mindestens eine zweite Schnittstelle Mittel (307) zur Signalisierung von Zuständen aufweisen und/oder die Mittel(305) zur Datenspeicherung mit Mitteln (307) zur Signalisierung von Zuständen kombiniert sind.

## Claims

1. A method for the configuration of interfaces of a wireless link for data transfer between at least one first and at least one second data processing device, wherein in at least one first interface of the wireless link at least a part of the data required for the configuration of the interfaces is stored, at least a part of the data for the configuration is transferred via a first communication link from the at least one first interface to a means (305) for data storage, at least a part of the data for the configuration transferred to the means (305) for data storage is made available via a second communication link to at least one second interface of the wireless link and/or the second data processing device connectable to the at least one second interface and, depending on the data for the configuration made available, a link between the at least one first and the at least one second data processing device is establishable,
**characterised in that** the second interface is formed as a wireless adapter (102, 302) and the means (305) for data storage is integrated in the wireless adapter (102, 302) and **in that** the communication between the at least one first data processing device and the at least one second data processing device is effected via the at least one first interface and the wireless adapter (102, 302) connected to the at least one second data processing device.

2. Method for the configuration of interfaces of a wireless link for data transfer, wherein at least a part of the data required for the configuration of the interfaces is stored in at least one first interface of the wireless link and in a means (305) for data storage, wherein the data for the configuration stored in the at least one first interface and in the means (305) for data storage is synchronised in such a way that a wireless link between the at least one first interface and the at least one second interface of the wireless link is establishable, once at least a part of the data for the configuration stored in the means (305) for data storage has been made available via a communication link for the at least one second interface and/or for a data processing device connected to the at least one second interface,
**characterised in that** the second interface used is a wireless adapter (102, 302) and the means (305) for data storage is integrated in the wireless adapter (102, 302).

3. Method according to claim 2, **characterised in that** the at least one first interface and the means (305) for data storage have already been provided with synchronised data for the configuration of the interface at the time of production or at another point in time prior to delivery to a customer.

4. Method according to claim 1 or 2, **characterised in that**
- the at least one first interface of the wireless link is formed as an access point (101, 301) and/or
- the data processing device is formed as an end system (103).

5. Method according to claim 5, **characterised in that** the method is utilised to configure several access points (101, 301) to form a cluster.

6. Method according to claim 2, **characterised in that** the configuration of the interfaces is effected following the connection of one of the at least one second interface to the data processing device directly between the at least one first interface and the interlinked second interface and data processing device.

7. Method according to claim 1, **characterised in that** following the connection of the means (305) for data storage with the at least one first interface and prior to the transfer of the configuration data to the means (305) for data storage a check is carried out, as to whether
- the means (305) for data storage are authorised,
- the means (305) for data storage are usable for establishing a wireless link, and/or
- the transfer of information is permitted.

8. Method according to claim 1 or 2, **characterised in that** a successful transfer of configuration data is signalled.

9. Arrangement for the configuration of interfaces of a wireless link for data transfer comprising at least one first interface, at least one second interface as well as a means (305) for data storage, wherein the arrangement is set up in such a way that
at least a part of the configuration data required for the configuration of the interfaces is stored in the at least one first interface, at least a part of the configuration data stored in the at least one first interface is transferable to the means (305) for data storage via a first communication link,
at least a part of the configuration data transferred to the means (305) for data storage are usable via a second communication link for a data processing device and/or for the at least one second interface, and
depending upon the utilisable configuration data a link between the at least one first interface and the at least one second interface of the wireless link is establishable,
**characterised in that** the second interface is formed as a wireless adapter (102, 302) and the means (305) for data storage is integrated in the wireless adapter (102, 302).

10. Arrangement for the configuration of interfaces of a wireless link for data transfer, comprising at least one first interface, at least one second interface as well as a means (305) for data storage, wherein the arrangement is set up in such a way that
at least a part of the configuration data required for the configuration of the interfaces is stored in the at least one first interface and in the means (305) for data storage, and in that
the configuration data stored in the at least one first interface and in the means (305) for data storage are synchronised in such a way that a wireless link between the at least one first interface and the at least one second interface of the wireless link is establishable, once at least a part of the configuration data stored in the means (305) for data storage has been made available via a communication link for a data processing device connectable to the at least one second interface and/or the at least one second interface,
**characterised in that** the second interface is formed as a wireless adapter (102, 302) and the means (305) for data storage is integrated in the wireless adapter (102, 302).

11. Arrangement according to claim 9 or 10, **characterised in that** the wireless adapter (102, 302) is formed as a USB WLAN stick.

12. Arrangement according to claim 9 or 10, **characterised in that**
- at least one of the at least one first interface of the wireless link is formed as an access point (101, 301) to a data and/or communication network and/or
- the data processing device is formed as an end system (103) or as an access point (101, 301).

13. Arrangement according to claim 9 or 10, **characterised in that** the means (305) for data storage is formed as a USB storage module.

14. Arrangement according to claim 9 or 10, **characterised in that** variations and/or configurations for individual encryption are retrievable from the at least one first interface.

15. Arrangement according to claim 9 or 10, **characterised in that** the at least one first and/or the at least one second interface comprises means (307) for signalling states and/or **in that** the means (305) for data storage is combined with means (307) for signalling states.

## Revendications

1. Procédé de configuration des interfaces d'une connexion sans fil pour la transmission de données entre au moins un premier et au moins un deuxième dispositif de traitement de données, dans lequel au moins une partie des données nécessaires à la configuration des interfaces est stockée dans au moins une première interface de la connexion sans fil, au moins une partie des données pour la configuration étant transmise à un moyen (305) de stockage de données à partir de la première interface, via une première connexion de communication,
au moins une partie des données pour la configuration transmises au moyen (305) de stockage de données étant mise à la disposition d'au moins une deuxième interface de la connexion sans fil et/ou du deuxième dispositif de traitement de données connectable à au moins une deuxième interface de la connexion sans fil, via une deuxième connexion de communication, et
une connexion pouvant être établie entre l'au moins un premier et l'au moins un deuxième dispositifs de traitement de données en fonction des données pour la configuration mises à disposition,
**caractérisé en ce que**
la deuxième interface est réalisée en tant qu'un adaptateur (102, 302) sans fil et le moyen (305) de stockage de données est intégré dans l'adaptateur (102, 302) sans fil, et que la communication entre l'au moins un premier et l'au moins un deuxième dispositifs de traitement de données est effectuée via l'au moins une première interface et l'adaptateur (102, 302) sans fil connecté à l'au moins un deuxième dispositif de traitement de données.

2. Procédé de configuration des interfaces d'une connexion sans fil pour la transmission de données, dans lequel au moins une partie des données nécessaires à la configuration des interfaces est stockée dans au moins une première interface de la connexion sans fil et dans un moyen (305) de stockage de données, les données pour la configuration stockées dans l'au moins une première interface et dans le moyen (305) de stockage de données étant adaptées les unes aux autres de telle façon qu'une connexion sans fil puisse être établie entre l'au moins une première et l'au moins une deuxième interfaces après qu'au moins une partie des données pour la configuration stockées dans le moyen (305) de stockage de données ait été rendue utilisable pour l'au moins une deuxième interface et/ou pour un dispositif de traitement de données connecté à l'au moins une deuxième interface, par une connexion de communication,
**caractérisé en ce qu'**
un adaptateur (102, 302) sans fil est utilisé en tant que deuxième interface, et que le moyen (304) de stockage de données est intégré dans l'adaptateur (102, 302) sans fil.

3. Procédé selon la revendication 2,
**caractérisé en ce que**
l'au moins une première interface et un moyen (305) de stockage de données sont prévus de données adaptées les unes aux autres pour la configuration de l'interface déjà au moment de production ou à un autre moment antérieur à la livraison à un client.

4. Procédé selon les revendications 1 ou 2,
**caractérisé en ce que**
- l'au moins une première interface de la connexion sans fil est réalisée en tant que point d'accès (101, 301), et/ou
- le dispositif de traitement de données est réalisé en tant que système (103) terminal.

5. Procédé selon la revendication 5,
**caractérisé en ce que**
le procédé est utilisé pour configurer plusieurs points (101, 301) d'accès de sorte qu'ils forment un cluster.

6. Procédé selon la revendication 2,
**caractérisé en ce que**
la configuration des interfaces est effectuée directement entre l'au moins une première interface et la deuxième interface et le dispositif de traitement de données connectés l'un à l'autre, après la connexion d'une de l'au moins une deuxième interface au dispositif de traitement de données.

7. Procédé selon la revendication 1,
**caractérisé en ce qu'**
on vérifie, après la connexion des moyens (305) de stockage de données à l'au moins une première interface et avant la transmission de données de configuration aux moyens (305) de stockage de données,
- si les moyens (305) de stockage de données sont autorisés,
- si les moyens (305) de stockage de données peuvent être utilisés pour établir une connexion sans fil, et/ou
- si la transmission d'informations est permise.

8. Procédé selon les revendications 1 ou 2,
**caractérisé en ce qu'**
une transmission réussie de données de configuration est signalisée.

9. Disposition de configuration des interfaces d'une connexion sans fil pour la transmission de données, comprenant au moins une première et au moins une deuxième interface ainsi qu'un moyen (305) de stockage de données, la disposition étant tel qu'
au moins une partie des données de configuration nécessaires à la configuration des interfaces est stockée dans l'au moins une première interface,
au moins une partie des données de configuration stockées dans l'au moins une première interface peut être transmise au moyen (305) de stockage de données par une première connexion de communication,
au moins une partie des données de configuration transmises au moyen (305) de stockage de données est utilisable pour un dispositif de traitement de données et/ou pour l'au moins une deuxième interface, via une deuxième connexion de communication, et
une connexion peut être établie entre l'au moins une première et deuxième interface de la connexion sans fil en fonction des données de configuration utilisables,
**caractérisé en ce que**
la deuxième interface est réalisée en tant qu'adaptateur (102, 302) sans fil, et que le moyen (305) de stockage de données est intégré dans l'adaptateur (102, 302) sans fil.

10. Disposition de configuration des interfaces d'une connexion sans fil pour la transmission de données, comprenant au moins une première et au moins une deuxième interfaces ainsi qu'un moyen (305) de stockage de données, la disposition étant tel qu'
au moins une partie des données de configuration nécessaires à la configuration des interfaces est stockée dans l'au moins une première interface et dans le moyen (305) de stockage de données, et
les données de configuration stockées dans l'au moins une première interface et dans le moyen (305) de stockage de données sont adaptées les unes aux autres de telle façon qu'une connexion sans fil puisse être établie entre l'au moins une première et deuxième interfaces de la connexion sans fil après qu'au moins une partie des données de configuration stockées dans le moyen (305) de stockage de données ait été rendue utilisable pour un dispositif de traitement de données connectable à l'au moins une deuxième interface et/ou pour l'au moins une deuxième interface, par une connexion de communication,
**caractérisé en ce que**
la deuxième interface est réalisée en tant qu'adaptateur (102, 302) sans fil, et que le moyen (305) de stockage de données est intégré dans l'adaptateur (102, 302) sans fil.

11. Système selon les revendications 9 ou 10,
**caractérisé en ce que**
l'adaptateur (102, 302) sans fil est réalisé en tant que clé USB WiFi.

12. Système selon les revendications 9 ou 10,
**caractérisé en ce qu'**
- au moins une de l'au moins une première interface de la connexion sans fil est réalisée en tant que point d'accès (101, 301) à un réseau de données et/ou de communication, et/ou
- le dispositif de traitement de données est réalisé en tant que système (103) terminal ou en tant que point d'accès (103, 301).

13. Système selon les revendications 9 ou 10,
**caractérisé en ce que**
les moyens (305) de stockage de données sont réalisés en tant que module de mémoire USB.

14. Système selon les revendications 9 ou 10,
**caractérisé en ce que**
des variations et/ou des configurations pour le chiffrement individuel sont disponibles à partir de l'au moins une première interface.

15. Système selon les revendications 9 ou 10,
**caractérisé en ce que**
l'au moins une première et/ou l'au moins une deuxième interfaces comprend/comprennent des moyens (307) pour la signalisation d'états, et/ou les moyens (305) des stockage de données étant combinés à des moyens (307) pour la signalisation d'états.
